# EUROPEAN PATENT SPECIFICATION

(11) **EP 4 481 983 B1**
(45) Date of publication and mention of the grant of the patent: **15.04.2026**
(21) Application number: 23925620.9
(22) Date of filing: 14.11.2023
(51) Int. Cl.: H02J 7/00, H01M 10/44, H02J 7/36, H01H 19/54

(54) **BATTERY CHARGING SYSTEM AND BATTERY CHARGING METHOD**
BATTERIELADESYSTEM UND BATTERIELADEVERFAHREN
SYSTÈME DE CHARGE DE BATTERIE ET PROCÉDÉ DE CHARGE DE BATTERIE

(30) Priority: 19.04.2023 KR 20230051447
(43) Date of publication of application: 25.12.2024
(73) Proprietor: LG Energy Solution Ltd., Seoul 07335 (KR)
(72) Inventor: KIM, Dukyou, Daejeon 34122 (KR); LEE, Keunwook, Daejeon 34122 (KR)
(74) Representative: Plasseraud IP
(86) International application number: PCT/KR2023/018302
(87) International publication number: WO 2024/219578

(56) References cited:
- JP-A- 2014 063 567
- JP-A- 2018 033 264
- KR-A- 20160 129 525
- KR-A- 20160 129 525
- KR-A- 20200 018 957
- KR-A- 20200 018 957
- KR-B1- 101 744 711
- US-A- 5 923 008

## Description

### TECHNICAL FIELD

The present disclosure relates to a battery charging system and a battery charging method.

### [Background]

For battery chargers, the rated current is an important factor. Therefore, in order to provide high power to rapidly charge a battery, it is more efficient to increase a voltage than to increase a current. Therefore, in order to charge a plurality of batteries, it is more efficient to charge the plurality of batteries in series than to charge the plurality of batteries in parallel.

However, the speeds of charging the batteries are different during the process of charging the plurality of batteries connected in series. Therefore, there is a need for a method that does not charge batteries, which are fully charged first among the plurality of batteries, and continuously charges the remaining batteries. KR 2016 0129525 A relates to a charging apparatus, KR 2020 00018957 A relates to a device for balancing a battery and US 5923008 A relates to a rotary switch.

### [Summary]

### [Technical Problem]

The present disclosure attempts to provide a battery charging system and a battery charging method that are capable of charging a plurality of batteries in series by electrically disconnecting batteries, which are fully charged first, from a charger and continuously charging the remaining batteries.

### [Technical Solution]

An exemplary embodiment of the present disclosure provides a battery charging system according to claim 1.

The positive electrode terminal of the charger may be connected to the positive electrode terminal of the first battery, and the negative electrode terminal of the charger may be connected to the negative electrode terminal of the second battery.

When the node connection module electrically connects anode connected to the negative electrode terminal of the first battery and a node connected to the positive electrode terminal of the second battery, the charger may supply power to the first and second batteries.

When the node connection module electrically connects a node connected to the negative electrode terminal of the first battery and a node connected to the negative electrode terminal of the charger, the charger supplies power to the first battery.

When the node connection module electrically connects a node connected to the positive electrode terminal of the second battery and a node connected to the positive electrode terminal of the charger, the charger supplies power to the second battery.

The processor may be configured to compare the two-opposite-end voltage of each of the first and second batteries with a predetermined reference voltage and control the bypass device to electrically disconnect a battery, which corresponds to a two-opposite-end voltage equal to or higher than the reference voltage between the first and second batteries, from the positive electrode terminal and the negative electrode terminal of the charger.

Another embodiment of the present disclosure provides a battery charging method according to claim 7.

The power is supplied to the first and second batteries when the bypass device electrically connect a node connected to the negative electrode terminal of the first battery and a node connected to the positive electrode terminal of the second battery.

The power may be supplied to the first battery when the bypass device electrically connect a node connected to the negative electrode terminal of the first battery and a node connected to the negative electrode terminal of the charger.

The power may be supplied to the second battery when the bypass device electrically connect a node connected to the positive electrode terminal of the second battery and a node connected to the positive electrode terminal of the charger.

### [Advantageous Effects]

According to the present disclosure, in case that the plurality of batteries is charged in series, the battery, which is fully charged first, is electrically disconnected from the charger, and the remaining batteries are charged, such that the batteries may be efficiently charged.

According to the present disclosure, the rotary body structure, instead of a plurality of switch structures, may be provided to perform the constant operation to electrically disconnect the fully charged battery from the charger and electrically connect the remaining batteries to the charger.

According to the present disclosure, it is possible to simply control the bypass structure by means of the single control signal in accordance with the single rotary body structure, unlike a configuration in which a plurality of control signals is required in case that a plurality of switch structures is provided in two battery packs.

### [Brief Description of the Drawings]

FIG. 1 is a block diagram schematically illustrating a battery charging system according to an embodiment.
FIG. 2 is a detailed configuration view illustrating a detailed configuration of a bypass device in FIG. 1.
FIG. 3 is a circuit diagram illustrating a power route that connects two batteries in series to a charger according to the embodiment.
FIG. 4 is a circuit diagram illustrating a power route that connects one of the two batteries to the charger according to the embodiment when the bypass device illustrated in FIG. 3 rotates 90 degrees clockwise.
FIG. 5 is a circuit diagram illustrating a power route that connects one of the two batteries to the charger according to the embodiment when the bypass device illustrated in FIG. 3 rotates 90 degrees counterclockwise.
FIG. 6 is an exemplified view of a comparative circuit including a plurality of mechanical relays.
FIG. 7 is a circuit diagram illustrating a power route that connects two batteries in series to the charger in a battery charging system in which a plurality of bypass devices according to the embodiment is connected.
FIG. 8 is a circuit diagram illustrating a power route that connects three of the four batteries to the charger according to the embodiment when one of the two bypass devices illustrated in FIG. 7 rotates 90 degrees clockwise.
FIG. 9 is a circuit diagram illustrating a power route that connects two of the four batteries to the charger according to the embodiment when one of the two bypass devices illustrated in FIG. 8 rotates 90 degrees counterclockwise.
FIG. 10 is a circuit diagram illustrating a power route that connects one of the four batteries to the charger according to the embodiment when one of the two bypass devices illustrated in FIG. 9 rotates 90 degrees clockwise.
FIG. 11 is a flowchart illustrating a battery charging method according to the embodiment.

### [Detailed Description]

Hereinafter, embodiments disclosed in the present specification will be described in detail with reference to the accompanying drawings. The same or similar constituent elements are assigned with the same or similar reference numerals, and the repetitive description thereof will be omitted. The suffixes 'module', 'unit', 'part', and/or 'portion' used to describe constituent elements in the following description are used together or interchangeably in order to facilitate the description, but the suffixes themselves do not have distinguishable meanings or functions. In addition, in the description of the embodiment disclosed in the present specification, the specific descriptions of publicly known related technologies will be omitted when it is determined that the specific descriptions may obscure the subject matter of the embodiment disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element.

In the present application, it should be understood that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

Among the components according to the embodiment, a component, which controls another component under a particular control condition, may be installed with a program implemented as a set of instructions made by specifying control algorithms required to control the other components. The control component may generate output data by processing input data and stored data depending on the installed program. The control component may include a nonvolatile memory configured to store a program, and a memory configured to store data.

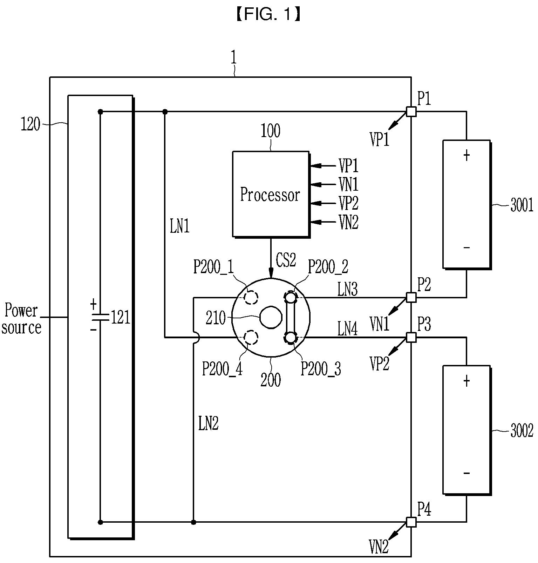

FIG. 1 is a block diagram schematically illustrating a battery charging system according to an embodiment.

With reference to FIG. 1, a battery charging system 1 may include a processor 100, a charger 120, and a bypass device 200.

The battery charging system 1 may include a plurality of terminals P1 to P4. The plurality of terminals P1 to P4 may be respectively connected to two opposite ends of each of a plurality of batteries 3001 and 3002. The terminal P1 may be connected to a positive electrode terminal (+) of the battery 3001, the terminal P2 may be connected to a negative electrode terminal (-) of the battery 3001, the terminal P3 may be connected to a positive electrode terminal (+) of the battery 3002, and the terminal P4 may be connected to a negative electrode terminal (-) of the battery 3002.

The drawing illustrates that the number of batteries 3001 and 3002 is two, and the number of terminals P1 to P4 is four. However, this is for convenience of description, and the present disclosure is not limited thereto. The battery charging system 1 may include three or more terminals so as to be connected to two opposite ends of each of two or more batteries.

The charger 120 may be connected to a power source and charge a capacitor 121 with energy by using the power source.

At a charging cycle at which the two batteries 3001 and 3002 are charged, the bypass device 200 may electrically connect a battery, which corresponds to a two-opposite-end voltage lower than a predetermined reference voltage, to the charger 120 and electrically disconnect the battery, which corresponds to a two-opposite-end voltage equal to or higher than the reference voltage, from the charger 120.

The processor 100 may monitor the two-opposite-end voltage of each of the two batteries 3001 and 3002 and control a rotation direction and a rotation angle of the bypass device 200 so that the two batteries 3001 and 3002 may be electrically connected to or disconnected from the charger 120. For example, depending on whether the voltages of the two batteries 3001 and 3002 are each equal to or higher than the predetermined reference voltage, the processor 100 may determine one of a power route for connecting the two batteries 3001 and 3002 in series, a power route for electrically connecting the negative electrode terminal (-) of the battery 3001 and the negative electrode terminal (-) of the capacitor 121, and a power route for electrically connecting the positive electrode terminal (+) of the battery 3002 and the positive electrode terminal (+) of the capacitor 121. The processor 100 may generate a control signal CS for controlling the rotation direction and the rotation angle of the bypass device 200 so that the rotation direction and the rotation angle of the bypass device 200 correspond to the determined power route.

The processor 100 may receive signals VP1, VN1, VP2, and VN2 indicating voltages from the two opposite ends of each of the two batteries 3001 and 3002. The processor 100 may receive a voltage measurement signal VP1, which indicates a positive electrode terminal voltage, from the positive electrode terminal (+) of the battery 3001. The processor 100 may receive a voltage measurement signal VN1, which indicates a negative electrode terminal voltage, from the negative electrode terminal (-) of the battery 3001. The processor 100 may receive a voltage measurement signal VP2, which indicates a positive electrode terminal voltage, from the positive electrode terminal (+) of the battery 3002. The processor 100 may receive a voltage measurement signal VN2, which indicates a negative electrode terminal voltage, from the negative electrode terminal (-) of the battery 3002.

The processor 100 may derive the two-opposite-end voltage of each of the two batteries 3001 and 3002 on the basis of the plurality of voltage measurement signals VP1, VN1, VP2, and VN2. For example, the processor 100 may derive the two-opposite-end voltage of the battery 3001 on the basis of the two voltage measurement signals VP1 and VN1.

The processor 100 may generate the control signal CS on the basis of the two-opposite-end voltage of each of the two batteries 3001 and 3002. The processor 100 may identify a state of charge by monitoring the two-opposite-end voltage of each of the two batteries 3001 and 3002. When a result of comparing the two-opposite-end voltage of each of the two batteries 3001 and 3002 with the predetermined reference voltage indicates that the two-opposite-end voltage of each of the two batteries 3001 and 3002 is equal to or higher than the predetermined reference voltage, the processor 100 may determine that the battery, which corresponds to the exceeding two-opposite-end voltage, is fully charged.

The speeds of charging the two batteries 3001 and 3002 may be different from each other in case that the two batteries 3001 and 3002 are charged in series. The processor 100 may generate the control signal CS that instructs the bypass device 200 to rotate so that the battery (e.g., 3001), which is determined as being fully charged first between the two batteries 3001 and 3002, does not receive power from the charger 120, and the processor 100 may transmit the control signal CS to the bypass device 200. The processor 100 may control the bypass device 200 to electrically disconnect the battery, which corresponds to the two-opposite-end voltage equal to or higher than the reference voltage among the two-opposite-end voltages of the two batteries 3001 and 3002, from the positive electrode terminal (+) and the negative electrode terminal (-) of the charger 120 on the basis of the control signal CS. The control signal CS may include a signal indicating a direction and a rotation angle, by which the bypass device 200 is to rotate, in order to form one of the power route for connecting the two batteries 3001 and 3002 in series, the power route for connecting the negative electrode terminal (-) of the battery 3001 and the negative electrode terminal (-) of the capacitor 121, and the power route for connecting the positive electrode terminal (+) of the battery 3002 and the positive electrode terminal (+) of the capacitor 121.

The charger 120 may supply power to at least one of the two batteries 3001 and 3002. The positive electrode terminal (+) and the negative electrode terminal (-) of the capacitor 121 may be connected to the corresponding terminals (e.g., P1 and P4) among the plurality of terminals P1 to P4.

The bypass device 200 may rotate an angle, which is indicated by the control signal CS, about a central shaft 210 and provide the power route that connects at least one battery, which is determined by the processor 100 so as to be charged by the charger 120, to the charger 120. The bypass device 200 may connect the positive electrode terminal (+) and/or the negative electrode terminal (-) of the capacitor 121 to the corresponding terminal among the plurality of terminals P1 to P4. In addition, in case that the number of batteries, which are determined to be charged by the processor 100, is two or more, the bypass device 200 may connect the two or more batteries in series.

The battery charging system 1 may include a plurality of lines LN1 to LN4 indicating the plurality of power routes. The bypass device 200 may include a plurality of terminals P200_1 to P200_4 connected to the plurality of lines LN1 to LN4. The line LN1 may be arranged along a power route between the positive electrode terminal (+) of the capacitor 121 and the terminal P200_4. The line LN2 may be arranged along a power route between the negative electrode terminal (-) of the capacitor 121 and the terminal P200_1. The line LN3 may be arranged along a power route between the terminal P2 and the terminal P200_2. The line LN4 may be arranged along a power route between the terminal P3 and the terminal P200_3.

FIG. 1 illustrates that the number of lines LN1 to LN4 is four, and the number of terminals P200_1 to P200_4 is four. However, this is for convenience of description, and the present disclosure is not limited thereto. The battery charging system 1 may include four or more terminals, and the bypass device 200 may be connected to four or more lines.

The bypass device 200 may rotate and provide a power route that connects the two adjacent terminals (e.g., P200_2 and P200_3) among the plurality of terminals P200_1 to P200_4.

In a first embodiment, the bypass device 200 may provide a power route that connects the two adjacent terminals P200_2 and P200_3. In a second embodiment, the bypass device 200 may rotate 90 degrees clockwise based on the first embodiment and provide a power route that connects the two adjacent terminals P200_3 and P200_4. In a third embodiment, the bypass device 200 may rotate 90 degrees counterclockwise based on the first embodiment and provide a power route that connects the two adjacent terminals P200_1 and P200_2. In a fourth embodiment, the bypass device 200 may rotate 90 degrees clockwise based on the second embodiment and provide a power route that connects the two adjacent terminals P200_4 and P200_1.

In the first embodiment, the bypass device 200 may connect the two batteries 3001 and 3002 in series to the charger 120. In this case, the charger 120 may supply power to the two batteries 3001 and 3002. In the second embodiment, the bypass device 200 may connect the positive electrode terminal (+) of the capacitor 121 and the positive electrode terminal of the battery 3002. In this case, the charger 120 may supply power to the battery 3002. In the third embodiment, the bypass device 200 may connect the negative electrode terminal (-) of the capacitor 121 and the negative electrode terminal of the battery 3001. In this case, the charger 120 may supply power to the battery 3001. In the fourth embodiment, the bypass device 200 may connect the positive electrode terminal (+) of the capacitor 121 and the negative electrode terminal (-) of the capacitor 121. In this case, the charger 120 does not supply power to the two batteries 3001 and 3002.

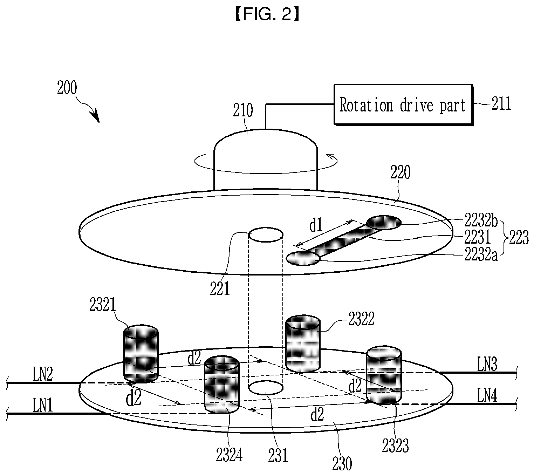

FIG. 2 is a detailed configuration view illustrating a detailed configuration of the bypass device in FIG. 1.

With reference to FIG. 2, the bypass device 200 may include the central shaft 210, an upper plate 220, and a lower plate 230. In the specification, for convenience of description, the terms such as the upper plate 220 and the lower plate 230 are used. However, this is for convenience of description, and the present disclosure is not limited thereto. In the bypass device 200, the upper plate 220 may be positioned below the lower plate 230.

The upper plate 220 may include a central portion 221 and a node connection module 223. The node connection module 223 may include a connection portion 2231, a first contact portion 2232a, and a second contact portion 2232b. The first contact portion 2232a and the second contact portion 2232b may be connected to each other through the connection portion 2231. The connection portion 2231 may be implemented by a busbar or the like. A spacing distance between the first contact portion 2232a and the second contact portion 2232b may be a predetermined distance d1.

The lower plate 230 may include a central portion 231 and a plurality of bypass nodes 2321 to 2324.

The lower plate 230 may include the plurality of bypass nodes 2321 to 2324 respectively and electrically connected to the positive electrode terminal (+) and the negative electrode terminal (-) of the charger 120, the negative electrode terminal of the battery 3001, and the positive electrode terminal of the battery 3002. The upper plate 220 may rotate in response to the control signal CS and electrically connect or disconnect the two adjacent nodes among the plurality of bypass nodes 2321 to 2324 by means of the node connection module 223.

Among the plurality of bypass nodes 2321 to 2324, the two adjacent nodes may be disposed to be spaced apart from each other at a predetermined distance d2 based on the central portion 231. A spacing distance between the bypass node 2321 and the bypass node 2322, a spacing distance between the bypass node 2322 and the bypass node 2323, a spacing distance between the bypass node 2323 and the bypass node 2324, and a spacing distance between the bypass node 2324 and the bypass node 2321 may each be the predetermined distance d2.

The bypass node 2322 may be formed at a position rotated at 90 degrees clockwise from the bypass node 2321 based on the central portion 231. The bypass node 2323 may be formed at a position rotated at 90 degrees clockwise from the bypass node 2322 based on the central portion 231. The bypass node 2324 may be formed at a position rotated at 90 degrees clockwise from the bypass node 2323 based on the central portion 231.

The predetermined distance d2 may be a distance falling within a predetermined range based on the predetermined distance d1.

A spacing distance between the central portion 221 and the first contact portion 2232a, a spacing distance between the central portion 221 and the second contact portion 2232b, a spacing distance between the central portion 231 and the bypass node 2321, a spacing distance between the central portion 231 and the bypass node 2322, a spacing distance between the central portion 231 and the bypass node 2323, and a spacing distance between the central portion 231 and the bypass node 2324 may fall within a predetermined range based on a predetermined length.

The plurality of bypass nodes 2321 to 2324 illustrated in FIG. 2 may be examples of the plurality of terminals P200_1 to P200_4 illustrated in FIG. 1. The bypass node 2321 may be an example of the terminal P200_1, the bypass node 2322 may be an example of the terminal P200_2, the bypass node 2323 may be an example of the terminal P200_3, and the bypass node 2324 may be an example of the terminal P200_4.

The bypass node 2321 may be connected to the line LN2 having one end connected to the negative electrode terminal (-) of the capacitor 121 illustrated in FIG. 1. The bypass node 2322 may be connected to the line LN3 having one end connected to the terminal P2 illustrated in FIG. 1. The bypass node 2322 may be connected to the line LN4 having one end connected to the terminal P3 illustrated in FIG. 1. The bypass node 2324 may be connected to the line LN1 having one end connected to the positive electrode terminal (+) of the capacitor 121 illustrated in FIG. 1.

The node connection module 223 and the plurality of bypass nodes 2321 to 2324 may each electrically connect the connected power routes.

The central portion 231 may be a region corresponding to the central portion 221. The lower plate 230 may be connected to the plurality of lines LN1 to LN4 without rotating, and the upper plate 220 may rotate about the central shaft 210. When the upper plate 220 rotates about the central shaft 210, the node connection module 223 may electrically connect the two adjacent bypass nodes (e.g., 2322 and 2323), among the plurality of bypass nodes 2321 to 2324, through a busbar or the like.

The bypass device 200 may include a rotation drive part 211 configured to rotate the upper plate 220 about the central shaft 210 in response to the control signal CS.

For example, when the upper plate 220 rotates and stops at an angle at which a lower portion of the first contact portion 2232a may be in contact with an upper portion of the bypass node 2322 and a lower portion of the second contact portion 2232b may be in contact with an upper portion of the bypass node 2323, the bypass device 200 may provide a bypass power route that reaches the line LN4 from the line LN3 through the bypass node 2322, the first contact portion 2232a, the connection portion 2231, the second contact portion 2232b, and the bypass node 2323.

When the upper plate 220 rotates and stops at an angle at which the lower portion of the first contact portion 2232a may be in contact with an upper portion of the bypass node 2323 and the lower portion of the second contact portion 2232b may be in contact with an upper portion of the bypass node 2324, the bypass device 200 may provide a bypass power route that reaches the line LN4 from the line LN1 through the bypass node 2324, the second contact portion 2232b, the connection portion 2231, the first contact portion 2232a, and the bypass node 2323.

When the upper plate 220 rotates and stops at the angle at which the lower portion of the first contact portion 2232a may be in contact with the upper portion of the bypass node 2321 and the lower portion of the second contact portion 2232b may be in contact with the upper portion of the bypass node 2322, the bypass device 200 may provide a bypass power route that reaches the line LN3 from the line LN2 through the bypass node 2321, the first contact portion 2232a, the connection portion 2231, the second contact portion 2232b, and the bypass node 2322.

In the specification, for convenience of description, the rotation of the upper plate 220 in response to the control signal CS will be described as the rotation of the bypass device 200.

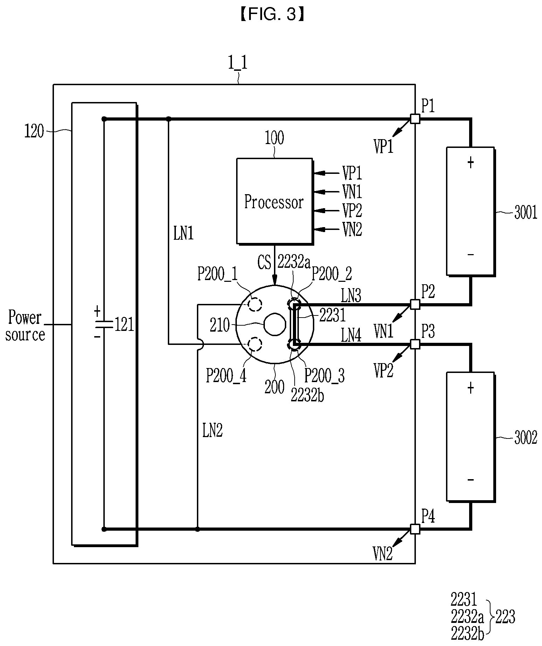

Hereinafter, the power routes implemented by the rotation of the bypass device 200 illustrated in FIG. 1 will be described with reference to FIGS. 3 to 5.

FIG. 3 is a circuit diagram illustrating the power route that connects the two batteries in series to the charger according to the embodiment.

A battery charging system 1_1 illustrated in FIG. 3 may be an example of the battery charging system 1 illustrated in FIG. 1. With reference to FIG. 3, the battery charging system 1_1 may include the processor 100, the charger 120, and a bypass device 200_1. Hereinafter, the descriptions of the processor 100, the charger 120, the bypass device 200_1, and the two batteries 3001 and 3002, which are identical to the above-mentioned components, may be omitted.

The bypass device 200_1 may include the node connection module 223, and the node connection module 223 may include the first contact portion 2232a, the connection portion 2231, and the second contact portion 2232b.

The bypass device 200_1 may rotate at an angle at which the first contact portion 2232a may be in contact with the terminal P200_2 and the second contact portion 2232b may be in contact with the terminal P200_3.

In the battery charging system 1_1, the positive electrode terminal (+) of the capacitor 121 may be connected to the positive electrode terminal (+) of the battery 3001 through the power route that passes through the terminal P1. The negative electrode terminal (-) of the battery 3001 may be connected to the positive electrode terminal (+) of the battery 3002 through the power route that passes through the terminal P2, the line LN3, the node connection module 223, the line LN4, and the terminal P3. The negative electrode terminal (-) of the battery 3002 may be connected to the negative electrode terminal (-) of the capacitor 121 through the power route that passes through the terminal P4.

In the battery charging system 1_1, the charger 120 may supply power to the two batteries 3001 and 3002 through the bypass device 200_1.

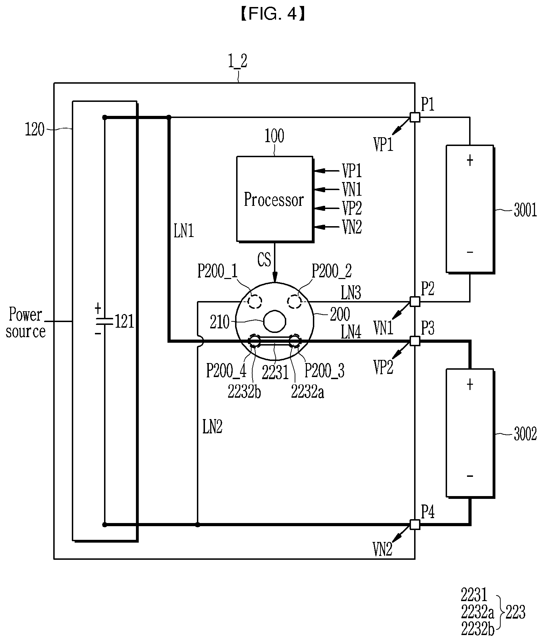

FIG. 4 is a circuit diagram illustrating the power route that connects one of the two batteries to the charger according to the embodiment when the bypass device illustrated in FIG. 3 rotates 90 degrees clockwise.

A battery charging system 1_2 illustrated in FIG. 4 may be an example of the battery charging system 1 illustrated in FIG. 1. The battery charging system 1_2 illustrated in FIG. 4 may be in a state in which the bypass device 200 of the battery charging system 1 illustrated in FIG. 1 rotates 90 degrees clockwise or rotates 270 degrees counterclockwise.

With reference to FIG. 4, the battery charging system 1_2 may include the processor 100, the charger 120, and a bypass device 200_2. Hereinafter, the descriptions of the processor 100, the charger 120, the bypass device 200_2, and the two batteries 3001 and 3002, which are identical to the above-mentioned components, may be omitted.

The bypass device 200_2 may include the node connection module 223, and the node connection module 223 may include the first contact portion 2232a, the connection portion 2231, and the second contact portion 2232b.

The bypass device 200_2 may rotate at an angle at which the first contact portion 2232a may be in contact with the terminal P200_3 and the second contact portion 2232b may be in contact with the terminal P200_4. The processor 100 may implement the bypass device 200_2 illustrated in FIG. 4 by rotating the bypass device 200_1 illustrated in FIG. 3 by 90 degrees clockwise in response to the control signal CS.

In the battery charging system 1_2, the positive electrode terminal (+) of the capacitor 121 may be connected to the positive electrode terminal (+) of the battery 3002 through the power route that passes through the line LN1, the node connection module 223, the line LN4, and the terminal P3. The negative electrode terminal (-) of the battery 3002 may be connected to the negative electrode terminal (-) of the capacitor 121 through the power route that passes through the terminal P4.

In the battery charging system 1_2, the charger 120 may supply power to the battery 3002 through the bypass device 200_2.

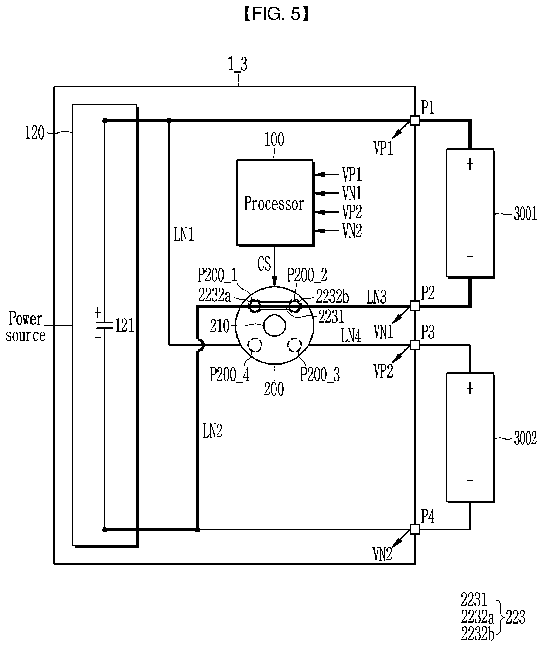

FIG. 5 is a circuit diagram illustrating the power route that connects one of the two batteries to the charger according to the embodiment when the bypass device illustrated in FIG. 3 rotates 90 degrees counterclockwise.

A battery charging system 1_3 illustrated in FIG. 5 may be an example of the battery charging system 1 illustrated in FIG. 1. The battery charging system 1_3 illustrated in FIG. 5 may be in a state in which the bypass device 200 of the battery charging system 1 illustrated in FIG. 1 rotates 270 degrees clockwise or rotates 90 degrees counterclockwise.

With reference to FIG. 5, the battery charging system 1_3 may include the processor 100, the charger 120, and a bypass device 200_3. Hereinafter, the descriptions of the processor 100, the charger 120, the bypass device 200_3, and the two batteries 3001 and 3002, which are identical to the above-mentioned components, may be omitted.

The bypass device 200_3 may include the node connection module 223, and the node connection module 223 may include the first contact portion 2232a, the connection portion 2231, and the second contact portion 2232b.

The bypass device 200_3 may rotate at an angle at which the first contact portion 2232a may be in contact with the terminal P200_3 and the second contact portion 2232b may be in contact with the terminal P200_4. The processor 100 may implement the bypass device 200_3 illustrated in FIG. 5 by rotating the bypass device 200_1 illustrated in FIG. 3 by 90 degrees counterclockwise in response to the control signal CS. Alternatively, the processor 100 may implement the bypass device 200_3 illustrated in FIG. 5 by rotating the bypass device 200_2 illustrated in FIG. 4 by 180 degrees clockwise or counterclockwise in response to the control signal CS.

In the battery charging system 1_3, the positive electrode terminal (+) of the capacitor 121 may be connected to the positive electrode terminal (+) of the battery 3001 through the power route that passes through the terminal P1. The negative electrode terminal (-) of the battery 3001 may be connected to the negative electrode terminal (-) of the capacitor 121 through the power route that passes through the terminal P2, the line LN3, the node connection module 223, and the line LN2.

In the battery charging system 1_3, the charger 120 may supply power to the battery 3001 through the bypass device 200_3.

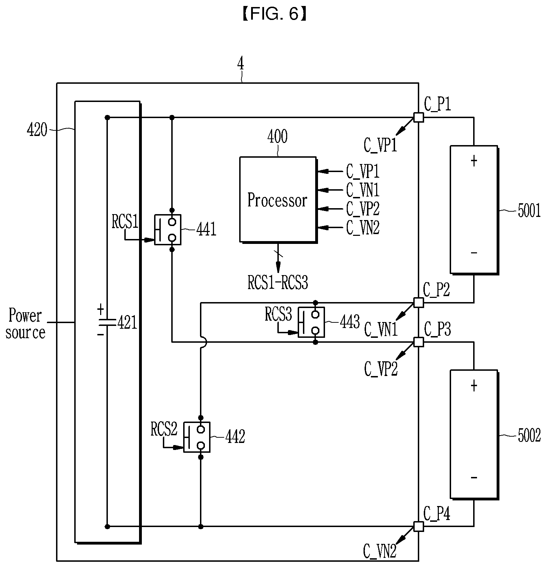

FIG. 6 is an exemplified view of a comparative circuit including a plurality of mechanical relays.

For example, a comparative circuit 4 illustrated in FIG. 6 does not include the bypass device of the battery charging system. The comparative circuit 4 may include a processor 400, a charger 420, and three mechanical relays 441 to 443.

The comparative circuit 4 may include a plurality of terminals C_P1 to C_P4. The plurality of terminals C_P1 to C_P4 may be connected to two opposite ends of each of the two batteries 5001 and 5002. The terminal C_P1 may be connected to a positive electrode terminal (+) of the battery 5001, the terminal C_P2 may be connected to a negative electrode terminal (-) of the battery 5001, the terminal C_P3 may be connected to a positive electrode terminal (+) of the battery 5002, and the terminal C_P4 may be connected to a negative electrode terminal (-) of the battery 5002.

The charger 420 may be connected to a power source and charge a capacitor 421 with energy by using the power source. One end of the relay 441 is connected to a positive electrode terminal (+) of a capacitor C0, and the other end of the relay 441 is connected to the terminal C_P3. One end of the relay 442 is connected to a negative electrode terminal (-) of the capacitor C0, and the other end of the relay 442 is connected to the terminal C_P2. One end of the relay 443 is connected to the terminal C_P2, and the other end of the relay 443 is connected to the terminal C_P3.

The processor 400 may monitor a two-opposite-end voltage of each of the two batteries 5001 and 5002 and determine at least one of the two batteries 5001 and 5002 that is to be charged by receiving power from the charger 420.

The processor 400 may receive signals C_VP1, C_VN1, C_VP2, and C_VN2 indicating voltages from the two opposite ends of each of the two batteries 3001 and 3002. The processor 400 may receive a voltage measurement signal C_VP1, which indicates a positive electrode terminal voltage, from the positive electrode terminal (+) of the battery 5001. The processor 400 may receive a voltage measurement signal C_VN1, which indicates a negative electrode terminal voltage, from the negative electrode terminal (-) of the battery 5001. The processor 400 may receive a voltage measurement signal C_VP2, which indicates a positive electrode terminal voltage, from the positive electrode terminal (+) of the battery 5002. The processor 400 may receive a voltage measurement signal C_VN2, which indicates a negative electrode terminal voltage, from the negative electrode terminal (-) of the battery 5002.

The processor 400 may derive the two-opposite-end voltage of each of the two batteries 5001 and 5002 on the basis of the plurality of voltage measurement signals C_VP1, C_VN1, C_VP2, and C_VN2. For example, the processor 400 may derive the two-opposite-end voltage of the battery 5001 on the basis of the two voltage measurement signals C_VP1 and C_VN1.

The processor 400 may connect the two batteries 5001 and 5002 in series to the two opposite ends of the charger 420 by turning off the two relays 441 and 442 and turning on the relay 443 in response to two relay control signals RCS1 and RCS2 at the off-level and a relay control signal RCS3 at the on-level.

Alternatively, the processor 400 may connect the battery 5001 to the two opposite ends of the charger 420 by turning off the two relays 441 and 443 and turning on the relay 442 in response to the two relay control signals RCS1 and RCS3 at the off-level and the relay control signal RCS2 at the on-level.

Alternatively, the processor 400 may connect the battery 5002 to the two opposite ends of the charger 420 by turning off the two relays 442 and 443 and turning on the relay 441 in response to the two relay control signals RCS2 and RCS3 at the off-level and the relay control signal RCS1 at the on-level.

In the embodiment, the battery charging system 1 may simply implement the bypass connection by means of the single bypass device 200, unlike the comparative circuit 4 that implements the bypass function by means of the plurality of mechanical relays 441 to 443.

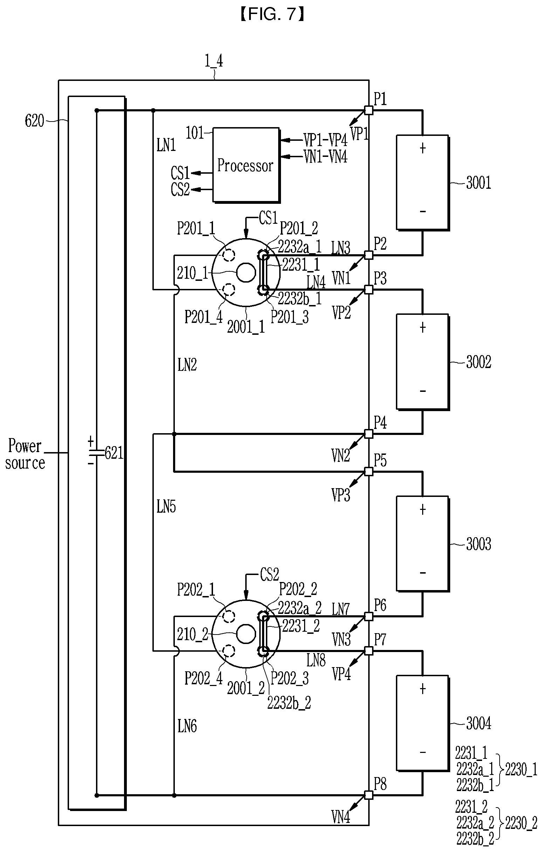

Hereinafter, a circuit according to the embodiment in which the plurality of bypass devices 200 illustrated in FIG. 1 is connected will be described with reference to FIGS. 7 to 10.

FIG. 7 is a circuit diagram illustrating the power route that connects two batteries in series to the charger in the battery charging system in which the plurality of bypass devices according to the embodiment is connected.

With reference to FIG. 7, a battery charging system 1_4 may include a processor 101, a charger 620, and a plurality of bypass devices 2001_1 and 2001_2.

The plurality of bypass devices 2001_1 and 2001_2 illustrated in FIG. 7 may each be implemented to have the same structure as the bypass device 200 illustrated in FIG. 1.

The battery charging system 1_4 may include a plurality of terminals P1 to P8. The plurality of terminals P1 to P8 may be respectively connected to two opposite ends of each of a plurality of batteries 3001 to 3004. The terminal P1 may be connected to a positive electrode terminal (+) of the battery 3001, and the terminal P2 may be connected to a negative electrode terminal (-) of the battery 3001. The terminal P3 may be connected to a positive electrode terminal (+) of the battery 3002, and the terminal P4 may be connected to a negative electrode terminal (-) of the battery 3002. The terminal P5 may be connected to a positive electrode terminal (+) of the battery 3003, and the terminal P6 may be connected to a negative electrode terminal (-) of the battery 3003. The terminal P7 may be connected to a positive electrode terminal (+) of the battery 3004, and the terminal P8 may be connected to a negative electrode terminal (-) of the battery 3004.

The charger 620 may be connected to a power source and charge a capacitor 621 with energy from the power source.

Hereinafter, the descriptions of the processor 101, the charger 620, the plurality of bypass devices 2001_1 and 2002_1, and the plurality of batteries 3001 to 3004, which are identical to the above-mentioned components, may be omitted.

The processor 101 may monitor a two-opposite-end voltage of each of the plurality of batteries 3001 to 3004 and determine at least one of the plurality of batteries 3001 to 3004 that is to be charged by receiving power from the charger 620.

The processor 101 may receive signals VP1 to VP4 and VN1 to VN4 indicating voltages from the two opposite ends of each of the plurality of batteries 3001 to 3004.

The processor 101 may receive the voltage measurement signal VP1, which indicates a positive electrode terminal voltage, from the positive electrode terminal (+) of the battery 3001. The processor 101 may receive the voltage measurement signal VN1, which indicates a negative electrode terminal voltage, from the negative electrode terminal (-) of the battery 3001. The processor 101 may receive the voltage measurement signal VP2, which indicates a positive electrode terminal voltage, from the positive electrode terminal (+) of the battery 3002. The processor 101 may receive the voltage measurement signal VN2, which indicates a negative electrode terminal voltage, from the negative electrode terminal (-) of the battery 3002.

The processor 101 may receive the voltage measurement signal VP3, which indicates a positive electrode terminal voltage, from the positive electrode terminal (+) of the battery 3003. The processor 101 may receive the voltage measurement signal VN3, which indicates a negative electrode terminal voltage, from the negative electrode terminal (-) of the battery 3003. The processor 101 may receive the voltage measurement signal VP4, which indicates a positive electrode terminal voltage, from the positive electrode terminal (+) of the battery 3004. The processor 101 may receive the voltage measurement signal VN4, which indicates a negative electrode terminal voltage, from the negative electrode terminal (-) of the battery 3004.

The processor 101 may derive the two-opposite-end voltage of each of the plurality of batteries 3001 to 3004 on the basis of the plurality of voltage measurement signals VP1 to VP4 and VN1 to VN4. For example, the processor 101 may derive the two-opposite-end voltage of the battery 3001 on the basis of the two voltage measurement signals VP1 and VN1.

The processor 101 may generate two control signals CS1 and CS2 on the basis of the two-opposite-end voltage of each of the plurality of batteries 3001 to 3004. The processor 101 may identify a state of charge by monitoring the two-opposite-end voltage of each of the plurality of batteries 3001 to 3004. When a result of comparing the two-opposite-end voltage of each of the plurality of batteries 3001 to 3004 with the predetermined reference voltage indicates that the two-opposite-end voltage of each of the plurality of batteries 3001 to 3004 is equal to or higher than the predetermined reference voltage, the processor 101 may determine that the battery, which corresponds to the exceeding two-opposite-end voltage, is fully charged.

The speeds of charging the plurality of batteries 3001 to 3004 may be different from each one another in case that the plurality of batteries 3001 to 3004 are charged in series. The processor 101 may generate the control signal CS1 that instructs the bypass device 2001_1 to rotate so that the battery (e.g., 3001), which is determined as being fully charged first among the plurality of batteries 3001 to 3004, does not receive power from the charger 620.

The charger 620 may supply power to at least one of the plurality of batteries 3001 to 3004.

The bypass device 2001_1 may include a node connection module 2230_1, and the node connection module 2230_1 may include a first contact portion 2232a_1, a connection portion 2231_1, and a second contact portion 2232b_1.

The bypass device 2001_2 may include a node connection module 2230_2, and the node connection module 2230_2 may include a first contact portion 2232a_2, a connection portion 2231_2, and a second contact portion 2232b_2.

The battery charging system 1_4 may include a plurality of lines LN1 to LN8 illustrating the plurality of power routes. The bypass device 2001_1 may include a plurality of terminals P201_1 to P201_4, and the bypass device 2002_1 may include a plurality of terminals P202_1 and P202_4.

The line LN1 may be arranged along a power route between the positive electrode terminal (+) of the capacitor 621 and the terminal P201_4. The line LN2 may be arranged along a power route between the terminal P201_1 and a first node N1. The first node N1 may be a node connected to the terminal P4 and the terminal P5. The line LN3 may be arranged along a power route between the terminal P2 and the terminal P201_2. The line LN4 may be arranged along a power route between the terminal P3 and the terminal P201_3.

The line LN5 may be arranged along a power route between the first node N1 and the terminal P202_4. The line LN6 may be arranged along a power route between the terminal P202_1 and the negative electrode terminal (-) of the capacitor 621. The line LN7 may be arranged along a power route between the terminal P6 and the terminal P202_2. The line LN8 may be arranged along a power route between the terminal P7 and the terminal P202_3.

FIG. 7 illustrates that the number of bypass devices 2001_1 and 2002_1 is two. However, this is for convenience of description, and the present disclosure is not limited thereto. Two or more bypass devices may be included while corresponding to four or more batteries that constitute the battery charging system 1.

The bypass device 2001_1 may rotate at an angle at which the first contact portion 2232a_1 may be in contact with the terminal P201_2 and the second contact portion 2232b_1 may be in contact with the terminal P201_3. The processor 101 may implement the bypass device 2001_1 illustrated in FIG. 7 in response to the control signal CS1.

The bypass device 2001_2 may rotate at an angle at which the first contact portion 2232a_2 may be in contact with the terminal P202_2 and the second contact portion 2232b_2 may be in contact with the terminal P202_3. The processor 101 may implement the bypass device 2001_2 illustrated in FIG. 7 in response to the control signal CS2.

In the battery charging system 1_4, the positive electrode terminal (+) of the capacitor 621 may be connected to the positive electrode terminal (+) of the battery 3001 through the power route that passes through the terminal P1. The negative electrode terminal (-) of the battery 3001 may be connected to the positive electrode terminal (+) of the battery 3002 through the power route that passes through the terminal P2, the line LN3, the bypass device 2001_1, the line LN4, and the terminal P3. The negative electrode terminal (-) of the battery 3002 may be connected to the positive electrode terminal (+) of the battery 3003 through the power route that passes through the terminal P4, the first node N1, and the terminal P5. The negative electrode terminal (-) of the battery 3003 may be connected to the positive electrode terminal (+) of the battery 3004 through the power route that passes through the terminal P6, the line LN7, the bypass device 2001_2, the line LN8, and the terminal P7. The negative electrode terminal (-) of the battery 3004 may be connected to the negative electrode terminal (-) of the capacitor 621 through the power route that passes through the terminal P8.

In the battery charging system 1_4, the charger 620 may supply power to the four batteries 3001 to 3004 through the two bypass devices 2001_1 and 2001_2.

In case that the processor 101 determines that the battery 3003 is fully charged first among the plurality of batteries 3001 to 3004, the processor 101 may rotate the bypass device 2001_2 in response to the control signal CS2.

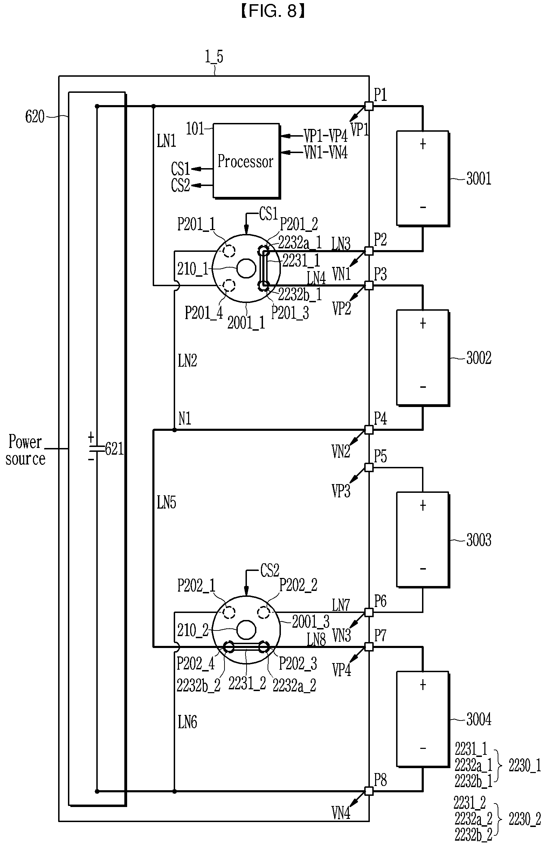

FIG. 8 is a circuit diagram illustrating the power route that connects three of the four batteries to the charger according to the embodiment when one of the two bypass devices illustrated in FIG. 7 rotates 90 degrees clockwise.

With reference to FIG. 8, a battery charging system 1_5 may include the processor 101, the charger 620, and a plurality of bypass devices 2001_1 and 2001_3. The bypass device 2001_3 may be implemented by rotating the bypass device 2001_2 illustrated in FIG. 7 by 90 degrees clockwise.

The plurality of bypass devices 2001_1 and 2001_3 illustrated in FIG. 8 may each be implemented to have the same structure as the bypass device 200 illustrated in FIG. 1.

The battery charging system 1_5 illustrated in FIG. 8 may be in a state in which the bypass device 2001_2, among the plurality of bypass devices 2001_1 and 2001_2 of the battery charging system 1_4 illustrated in FIG. 7, rotates 90 degrees clockwise or rotates 270 degrees counterclockwise.

Hereinafter, the descriptions of the processor 101, the charger 620, the plurality of bypass devices 2001_1 and 2001_3, and the plurality of batteries 3001 to 3004, which are identical to the above-mentioned components, may be omitted.

The bypass device 2001_3 may include the node connection module 2230_2, and the node connection module 2230_2 may include the first contact portion 2232a_2, the connection portion 2231_2, and the second contact portion 2232b_2.

The bypass device 2001_1 may rotate at an angle at which the first contact portion 2232a_1 may be in contact with the terminal P201_2 and the second contact portion 2232b_1 may be in contact with the terminal P201_3. The processor 101 may implement the bypass device 2001_1 illustrated in FIG. 8 in response to the control signal CS1. A rotation angle of the bypass device 2001_1 illustrated in FIG. 8 may be equal to a rotation angle of the bypass device 2001_1 illustrated in FIG. 7.

The bypass device 2001_3 may rotate at an angle at which the first contact portion 2232a_2 may be in contact with the terminal P202_3 and the second contact portion 2232b_2 may be in contact with the terminal P202_4. The processor 101 may implement the bypass device 2001_3 illustrated in FIG. 8 by rotating the bypass device 2001_2 illustrated in FIG. 7 by 90 degrees clockwise in response to the control signal CS2.

In the battery charging system 1_5, the positive electrode terminal (+) of the capacitor 621 may be connected to the positive electrode terminal (+) of the battery 3001 through the power route that passes through the terminal P1. The negative electrode terminal (-) of the battery 3001 may be connected to the positive electrode terminal (+) of the battery 3002 through the power route that passes through the terminal P2, the line LN3, the bypass device 2001_1, the line LN4, and the terminal P3. The negative electrode terminal (-) of the battery 3002 may be connected to the positive electrode terminal (+) of the battery 3004 through the power route that passes through the terminal P4, the first node N1, the line LN5, the bypass device 2001_3, the line LN8, and the terminal P7. The negative electrode terminal (-) of the battery 3004 may be connected to the negative electrode terminal (-) of the capacitor 621 through the power route that passes through the terminal P8.

In the battery charging system 1_5, the charger 620 may supply power to the three batteries 3001, 3002, and 3004 through the two bypass devices 2001_1 and 2001_3.

In case that the processor 101 determines that the battery 3002 is fully charged first among the three batteries 3001, 3002, and 3004, the processor 101 may rotate the bypass device 2001_1 in response to the control signal CS1.

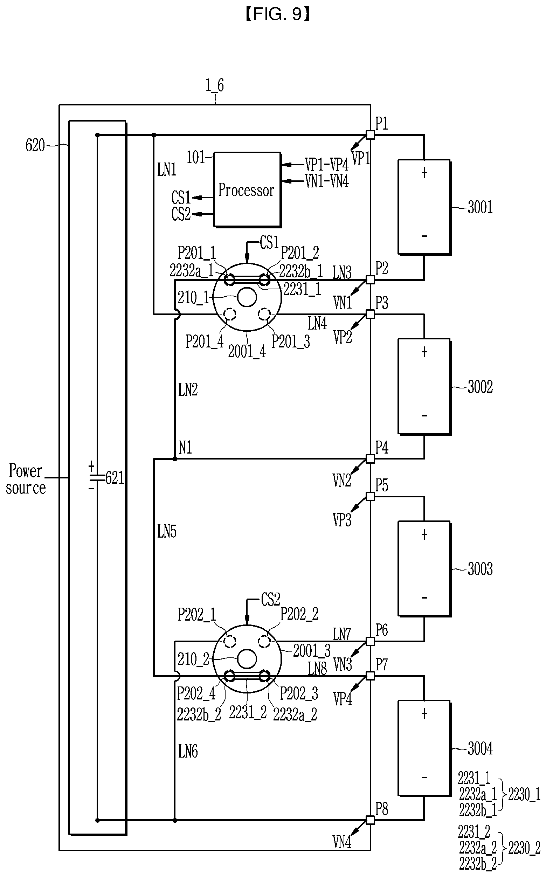

FIG. 9 is a circuit diagram illustrating the power route that connects two of the four batteries to the charger according to the embodiment when one of the two bypass devices illustrated in FIG. 8 rotates 90 degrees counterclockwise.

With reference to FIG. 9, a battery charging system 1_6 may include the processor 101, the charger 620, and a plurality of bypass devices 2001_3 and 2001_4. The bypass device 2001_4 may be implemented by rotating the bypass device 2001_1 illustrated in FIG. 8 by 90 degrees counterclockwise.

The plurality of bypass devices 2001_3 and 2001_4 illustrated in FIG. 9 may each be implemented to have the same structure as the bypass device 200 illustrated in FIG. 1.

The battery charging system 1_6 illustrated in FIG. 9 may be in a state in which the bypass device 2001_1, among the plurality of bypass devices 2001_1 and 2001_3 of the battery charging system 1_5 illustrated in FIG. 8, rotates 270 degrees clockwise or rotates 90 degrees counterclockwise.

Hereinafter, the descriptions of the processor 101, the charger 620, the plurality of bypass devices 2001_3 and 2001_4, and the plurality of batteries 3001 to 3004, which are identical to the above-mentioned components, may be omitted.

The bypass device 2001_4 may include the node connection module 2230_1, and the node connection module 2230_1 may include the first contact portion 2232a_1, the connection portion 2231_1, and the second contact portion 2232b_1.

The bypass device 2001_4 may rotate at an angle at which the first contact portion 2232a_1 may be in contact with the terminal P201_1 and the second contact portion 2232b_1 may be in contact with the terminal P201_2. The processor 101 may implement the bypass device 2001_4 illustrated in FIG. 9 by rotating the bypass device 2001_1 illustrated in FIG. 8 by 90 degrees counterclockwise in response to the control signal CS1.

The bypass device 2001_3 may rotate at an angle at which the first contact portion 2232a_2 may be in contact with the terminal P202_3 and the second contact portion 2232b_2 may be in contact with the terminal P202_4. The processor 101 may implement the bypass device 2001_3 illustrated in FIG. 9 in response to the control signal CS2. A rotation angle of the bypass device 2001_3 illustrated in FIG. 9 may be equal to a rotation angle of the bypass device 2001_3 illustrated in FIG. 8.

In the battery charging system 1_6, the positive electrode terminal (+) of the capacitor 621 may be connected to the positive electrode terminal (+) of the battery 3001 through the power route that passes through the terminal P1. The negative electrode terminal (-) of the battery 3001 may be connected to the positive electrode terminal (+) of the battery 3004 through the power route that passes through the terminal P2, the line LN3, the bypass device 2001_4, the line LN2, the first node N1, the line LN5, the bypass device 2001_3, the line LN8, and the terminal P7. The negative electrode terminal (-) of the battery 3004 may be connected to the negative electrode terminal (-) of the capacitor 621 through the power route that passes through the terminal P8.

In the battery charging system 1_6, the charger 620 may supply power to the two batteries 3001 and 3004 through the two bypass devices 2001_3 and 2001_4.

In case that the processor 101 determines that the battery 3004 is fully charged first between the two batteries 3001 and 3004, the processor 101 may rotate the bypass device 2001_3 in response to the control signal CS2.

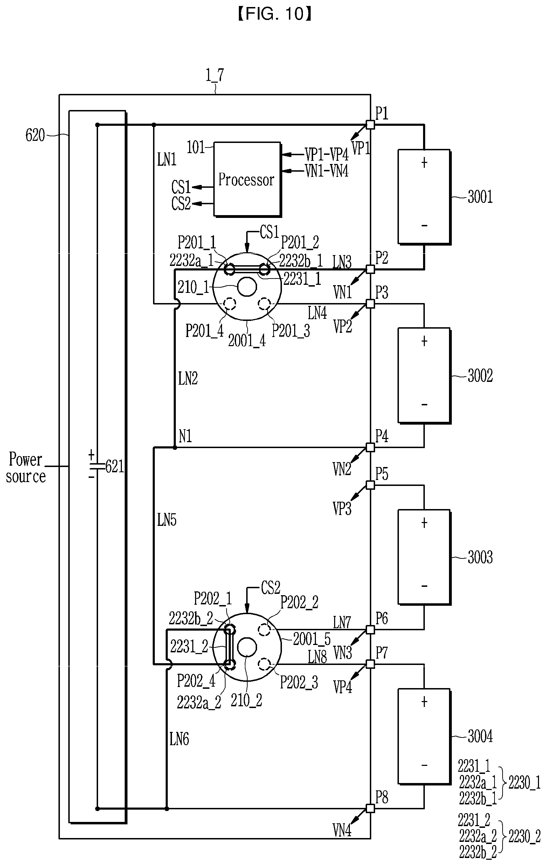

FIG. 10 is a circuit diagram illustrating the power route that connects one of the four batteries to the charger according to the embodiment when one of the two bypass devices illustrated in FIG. 9 rotates 90 degrees clockwise.

With reference to FIG. 10, a battery charging system 1_7 may include the processor 101, the charger 620, and a plurality of bypass devices 2001_4 and 2001_5. The bypass device 2001_5 may be implemented by rotating the bypass device 2001_3 illustrated in FIG. 9 by 90 degrees clockwise.

The plurality of bypass devices 2001_4 and 2001_5 illustrated in FIG. 10 may each be implemented to have the same structure as the bypass device 200 illustrated in FIG. 1.

The battery charging system 1_7 illustrated in FIG. 10 may be in a state in which the bypass device 2001_3, among the plurality of bypass devices 2001_3 and 2001_4 of a battery charging system 1_9 illustrated in FIG. 9, rotates 90 degrees clockwise or rotates 270 degrees counterclockwise.

Hereinafter, the descriptions of the processor 101, the charger 620, the plurality of bypass devices 2001_4 and 2001_5, and the plurality of batteries 3001 to 3004, which are identical to the above-mentioned components, may be omitted.

The bypass device 2001_5 may include the node connection module 2230_2, and the node connection module 2230_2 may include the first contact portion 2232a_2, the connection portion 2231_2, and the second contact portion 2232b_2.

The bypass device 2001_4 may rotate at an angle at which the first contact portion 2232a_1 may be in contact with the terminal P201_1 and the second contact portion 2232b_1 may be in contact with the terminal P201_2. The processor 101 may implement the bypass device 2001_4 illustrated in FIG. 10 in response to the control signal CS1. A rotation angle of the bypass device 2001_4 illustrated in FIG. 10 may be equal to a rotation angle of the bypass device 2001_4 illustrated in FIG. 9.

The bypass device 2001_5 may rotate at an angle at which the first contact portion 2232a_2 may be in contact with the terminal P202_4 and the second contact portion 2232b_2 may be in contact with the terminal P202_1. The processor 101 may implement the bypass device 2001_5 illustrated in FIG. 10 by rotating the bypass device 2001_3 illustrated in FIG. 9 by 90 degrees clockwise in response to the control signal CS2.

In the battery charging system 1_7, the positive electrode terminal (+) of the capacitor 621 may be connected to the positive electrode terminal (+) of the battery 3001 through the power route that passes through the terminal P1. The negative electrode terminal (-) of the battery 3001 may be connected to the negative electrode terminal (-) of the capacitor 621 through the power route that passes through the terminal P2, the line LN3, the bypass device 2001_4, the line LN2, the first node N1, the line LN5, the bypass device 2001_3, and the line LN6.

In the battery charging system 1_7, the charger 620 may supply power to the single battery 3001 through the two bypass devices 2001_4 and 2001_5.

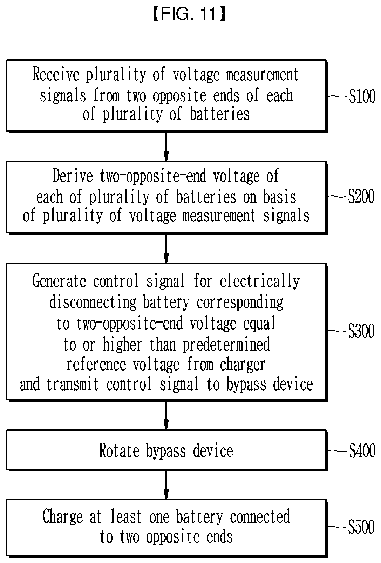

FIG. 11 is a flowchart illustrating a battery charging method according to the embodiment.

Hereinafter, the flowchart in FIG. 11 will be described with reference to the battery charging system 1 illustrated in FIG. 1. The descriptions of the processor 100, the charger 120, the bypass device 200, and the plurality of batteries 3001 and 3002, which are identical to the above-mentioned components, may be omitted.

With reference to FIG. 11, the processor 100 may receive the plurality of voltage measurement signals VP1, VN1, VP2, and VN2 from the two opposite ends of each of the plurality of batteries 3001 and 3002 (S100).

The processor 100 may derive the two-opposite-end voltage of each of the plurality of batteries 3001 and 3002 on the basis of the plurality of voltage measurement signals VP1, VN1, VP2, and VN2 (S200).

The processor 100 may generate the control signal CS for electrically disconnecting the battery, which corresponds to the two-opposite-end voltage equal to or higher than the predetermined reference voltage among the plurality of batteries 3001 and 3002, from the charger, and the processor 100 may transmit the control signal CS to the bypass device 200 (S300).

The bypass device 200, which receives the control signal CS, may rotate in accordance with the rotation direction and the rotation angle indicated by the control signal CS (S400).

With reference to FIGS. 3 and 4, when the processor 100 determines that the two-opposite-end voltage of the battery 3001 is equal to or higher than the reference voltage while the two batteries 3001 and 3002 are charged by the charger 120 in the state illustrated in FIG. 3, the processor 100 may generate the control signal CS for electrically disconnecting the battery 3001 from the charger 120 and transmit the control signal CS to the bypass device 200. The control signal CS for electrically disconnecting the battery 3001 from the charger 120 may include a signal that instructs the bypass device 200 to rotate 90 degrees clockwise.

The bypass device 200, which receives the control signal CS that instructs the bypass device 200 to rotate 90 degrees clockwise, may rotate 90 degrees clockwise, as illustrated in FIG. 4.

With reference back to FIG. 11, the charger 120 may charge at least one battery connected to the two opposite ends thereof (S500).

In the example in FIG. 3, the charger 120 may charge the two batteries 3001 and 3002 connected to the two opposite ends thereof. In the example in FIG. 4, the charger 120 may charge the battery 3002 connected to the two opposite ends thereof.

## Claims

1. A battery charging system (1), which is configured to be connected to two opposite ends of each of a plurality of batteries (3001, 3002), the battery charging system (1) comprising:
a charger (120) configured to supply power;
a bypass device (200) configured to rotate about a central shaft and configured to provide a power route that connects at least one of the first and second batteries to two opposite ends of the charger (120); and
a processor (100) configured to monitor a two-opposite-end voltage of each of the first and second batteries and control a rotation direction and a rotation angle of the bypass device (200);
wherein:
the bypass device (200) comprises:
a first plate (230) including a plurality of bypass nodes (2321, 2322, 2323, 2324 electrically and respectively connected to the positive electrode terminal of the charger (120), the negative electrode terminal of the charger (120), the negative electrode terminal of the first battery (3001), and the positive electrode terminal of the second battery (3002); and
a second plate (220) including a node connection module (223) configured to rotate in response to a control signal of the processor and electrically connect two nodes indicated by the control signal among the plurality of bypass nodes;
wherein
the node connection module (223) comprises a connection portion (2231) and first (2232a) and second (2232b) contact portions which are connected to each other through the connection portion.

2. The battery charging system (1) of claim 1, wherein:
the positive electrode terminal of the charger (120) is configured to be connected to the positive electrode terminal of the first battery (3001), and the negative electrode terminal of the charger (120) is configured to be connected to the negative electrode terminal of the second battery (3002).

3. The battery charging system (1) of claim 2, being configured such that:
when the node connection module (223) electrically connects a node connected to the negative electrode terminal of the first battery (3001) and a node connected to the positive electrode terminal of the second battery (3002), the charger (120) supplies power to the first and second batteries.

4. The battery charging system (1) of claim 2, being configured such that:
when the node connection module (223) electrically connects a node connected to the negative electrode terminal of the first battery (3001) and a node connected to the negative electrode terminal of the charger (120), the charger (120) supplies power to the first battery (3001).

5. The battery charging system (1) of claim 2, being configured such that:
when the node connection module (223) electrically connects a node connected to the positive electrode terminal of the second battery (3002) and a node connected to the positive electrode terminal of the charger (120), the charger (120) supplies power to the second battery (3002).

6. The battery charging system (1) of claim 1, wherein:
the processor (100) is configured to compare the two-opposite-end voltage of each of the first and second batteries with a predetermined reference voltage and control the bypass device (200) to electrically disconnect a battery, which corresponds to a two-opposite-end voltage equal to or higher than the reference voltage between the first and second batteries, from the positive electrode terminal and the negative electrode terminal of the charger (120).

7. A battery charging method by means of the battery charging system of claim 1, the method comprising:
receiving a plurality of voltage measurement signals from two opposite ends of each of the first and second batteries;
deriving a two-opposite-end voltage of each of the first and second batteries on the basis of the voltage measurement signals;
comparing the two-opposite-end voltage of each of the first and second batteries with a predetermined reference voltage and generating a control signal;
rotating the bypass device (200) about its central shaft and providing a power route that connects at least one of the first and second batteries to two opposite ends of the charger (120); and
supplying power to at least one battery through the charger (120).

8. The battery charging method of claim 7, wherein:
the power is supplied to the first and second batteries when the bypass device (200) electrically connects a node connected to the negative electrode terminal of the first battery (3001) and a node connected to the positive electrode terminal of the second battery (3002).

9. The battery charging method of claim 7, wherein:
the power is supplied to the first battery (3001) when the bypass device (200) electrically connects a node connected to the negative electrode terminal of the first battery (3001) and a node connected to the negative electrode terminal of the charger (120).

10. The battery charging method of claim 7, wherein:
the power is supplied to the second battery (3002) when the bypass device (120) electrically connects a node connected to the positive electrode terminal of the second battery (3002) and a node connected to the positive electrode terminal of the charger (120).

## Patentansprüche

1. Batterieladesystem (1), welches dazu eingerichtet ist, mit zwei entgegengesetzten Enden jeder aus einer Mehrzahl von Batterien (3001, 3002) verbunden zu sein, wobei das Batterieladesystem (1) umfasst:
eine Ladeeinheit (120), welche dazu eingerichtet ist, Energie zu liefern;
eine Umleitungsvorrichtung (200), welche dazu eingerichtet ist, um einen zentralen Schaft zu rotieren, und welche dazu eingerichtet ist, eine Energiestrecke bereitzustellen, welche wenigstens eine aus der ersten und der zweiten Batterie mit zwei entgegengesetzten Enden der Ladeeinheit (120) verbindet; und
einen Prozessor (100), welcher dazu eingerichtet ist, eine Spannung zweier entgegengesetzter Enden von jeder aus der ersten und der zweiten Batterie zu überwachen und eine Rotationsrichtung sowie einen Rotationswinkel der Umleitungsvorrichtung (200) zu steuern;
wobei:
die Umleitungsvorrichtung (200) umfasst:
eine erste Platte (230), welche eine Mehrzahl von Umleitungsknoten (2321, 2322, 2323, 2324) umfasst, welche elektrisch und jeweils mit dem positiven Elektrodenanschluss der Ladeeinheit (120), mit dem negativen Elektrodenanschluss der Ladeeinheit (120), dem negativen Elektrodenanschluss der ersten Batterie (3001) und dem positiven Elektrodenanschluss der zweiten Batterie (3002) verbunden sind; und
eine zweite Platte (220), welche ein Knoten-Verbindungsmodul (223) umfasst, welches dazu eingerichtet ist, als Reaktion auf ein Steuersignal des Prozessors zu rotieren und zwei durch das Steuersignal indizierte Knoten unter der Mehrzahl von Umleitungsknoten elektrisch zu verbinden;
wobei das Knoten-Verbindungsmodul (223) einen Verbindungsabschnitt (2231) und einen ersten (2232a) sowie einen zweiten (2232b) Kontaktabschnitt umfasst, welche miteinander durch den Verbindungsabschnitt verbunden sind.

2. Batterieladesystem (1) nach Anspruch 1, wobei:
der positive Elektrodenanschluss der Ladeeinheit (120) dazu eingerichtet ist, mit dem positiven Elektrodenanschluss der ersten Batterie (3001) verbunden zu sein, und der negative Elektrodenanschluss der Ladeeinheit (120) dazu eingerichtet ist, mit dem negativen Elektrodenanschluss der zweiten Batterie (3002) verbunden zu sein.

3. Batterieladesystem (1) nach Anspruch 2, welches derart eingerichtet ist, dass:
wenn das Knoten-Verbindungsmodul (223) einen Knoten, welcher mit dem negativen Elektrodenanschluss der ersten Batterie (3001) verbunden ist, elektrisch mit einem Knoten verbindet, welcher mit dem positiven Elektrodenanschluss der zweiten Batterie (3002) verbunden ist, die Ladeeinheit (120) der ersten und der zweiten Batterie Energie liefert.

4. Batterieladesystem (1) nach Anspruch 2, welches derart eingerichtet ist, dass:
wenn das Knoten-Verbindungsmodul (223) einen Knoten, welcher mit dem negativen Elektrodenanschluss der ersten Batterie (3001) verbunden ist, elektrisch mit einem Knoten verbindet, welcher mit dem negativen Elektrodenanschluss der Ladeeinheit (120) verbunden ist, die Ladeeinheit (120) der ersten Batterie (3001) Energie liefert.

5. Batterieladesystem (1) nach Anspruch 2, welches derart eingerichtet ist, dass:
wenn das Knoten-Verbindungsmodul (223) einen Knoten, welcher mit dem positiven Elektrodenanschluss der zweiten Batterie (3002) verbunden ist, elektrisch mit einem Knoten verbindet, welcher mit dem positiven Elektrodenanschluss der Ladeeinheit (120) verbunden ist, die Ladeeinheit (120) der zweiten Batterie (3002) Energie liefert.

6. Batterieladesystem (1) nach Anspruch 1, wobei:
der Prozessor (100) dazu eingerichtet ist, die Spannung zweier entgegengesetzter Enden von jeder aus der ersten und der zweiten Batterie mit einer vorbestimmten Referenzspannung zu vergleichen und die Umleitungsvorrichtung (200) zu steuern, um eine Batterie, welche einer Spannung zweier entgegengesetzter Enden entspricht, welche gleich wie oder höher als die Referenzspannung zwischen der ersten und der zweiten Batterie ist, von dem positiven Elektrodenanschluss und dem negativen Elektrodenanschluss der Ladeeinheit (120) elektrisch zu trennen.

7. Batterieladeverfahren mittels des Batterieladesystems nach Anspruch 1, wobei das Verfahren umfasst:
Empfangen einer Mehrzahl von Spannungsmesssignalen von zwei entgegengesetzten Enden jeder aus der ersten und der zweiten Batterie;
Ableiten einer Spannung zweier entgegengesetzter Enden von jeder aus der ersten und der zweiten Batterie auf Grundlage der Spannungsmesssignale;
Vergleichen der Spannung zweier entgegengesetzter Enden von jeder aus der ersten und der zweiten Batterie mit einer vorbestimmten Referenzspannung und Erzeugen eines Steuersignals;
Rotieren der Umleitungsvorrichtung (200) um dessen zentralen Schaft und Bereitstellen einer Energiestrecke, welche wenigstens eine aus der ersten und der zweiten Batterie mit zwei entgegengesetzten Enden der Ladeeinheit (120) verbindet; und
Liefern von Energie zu wenigstens einer Batterie durch die Ladeeinheit (120).

8. Batterieladeverfahren nach Anspruch 7, wobei:
die Energie zu der ersten und der zweiten Batterie geliefert wird, wenn die Umleitungsvorrichtung (200) einen Knoten, welcher mit dem negativen Elektrodenanschluss der ersten Batterie (3001) verbunden ist, elektrisch mit einem Knoten verbindet, welcher mit dem positiven Elektrodenanschluss der zweiten Batterie (3002) verbunden ist.

9. Batterieladeverfahren nach Anspruch 7, wobei:
die Energie zu der ersten Batterie (3001) geliefert wird, wenn die Umleitungsvorrichtung (200) einen Knoten, welcher mit dem negativen Elektrodenanschluss der ersten Batterie (3001) verbunden ist, elektrisch mit einem Knoten verbindet, welcher mit dem negativen Elektrodenanschluss der Ladeeinheit (120) verbunden ist.

10. Batterieladeverfahren nach Anspruch 7, wobei:
die Energie zu der zweiten Batterie (3002) geliefert wird, wenn die Umleitungsvorrichtung (120) einen Knoten, welcher mit dem positiven Elektrodenanschluss der zweiten Batterie (3002) verbunden ist, elektrisch mit einem Knoten verbindet, welcher mit dem positiven Elektrodenanschluss der Ladeeinheit (120) verbunden ist.

## Revendications

1. Système de charge de batterie (1), qui est configuré pour être connecté à deux extrémités opposées de chacune d'une pluralité de batteries (3001, 3002), le système de charge de batterie (1) comprenant :
un chargeur (120) configuré pour fournir de l'énergie ;
un dispositif de dérivation (200) configuré pour tourner autour d'un arbre central et configuré pour fournir un chemin d'alimentation qui connecte au moins l'une des première et seconde batteries à deux extrémités opposées du chargeur (120) ; et
un processeur (100) configuré pour surveiller une tension à deux extrémités opposées de chacune des première et seconde batteries et commander un sens de rotation et un angle de rotation du dispositif de dérivation (200) ;
dans laquelle :
le dispositif de dérivation (200) comprend :
une première plaque (230) comportant une pluralité de nœuds de dérivation (2321, 2322, 2323, 2324) connectés électriquement et respectivement à la borne d'électrode positive du chargeur (120), à la borne d'électrode négative du chargeur (120), à la borne d'électrode négative de la première batterie (3001) et à la borne d'électrode positive de la seconde batterie (3002) ; et
une seconde plaque (220) comportant un module de connexion de nœud (223) configuré pour tourner en réponse à un signal de commande du processeur et connecter électriquement deux nœuds indiqués par le signal de commande parmi la pluralité de nœuds de dérivation ;
dans laquelle
le module de connexion de nœud (223) comprend une partie de connexion (2231) et des première (2232a) et seconde (2232b) parties de contact qui sont connectées entre elles par l'intermédiaire de la partie de connexion.

2. Système de charge de batterie (1) selon la revendication 1, dans lequel :
la borne d'électrode positive du chargeur (120) est configurée pour être connectée à la borne d'électrode positive de la première batterie (3001), et la borne d'électrode négative du chargeur (120) est configurée pour être connectée à la borne d'électrode négative de la seconde batterie (3002).

3. Système de charge de batterie (1) selon la revendication 2, étant configuré de sorte que : lorsque le module de connexion de nœud (223) connecte électriquement un nœud connecté à la borne d'électrode négative de la première batterie (3001) et un nœud connecté à la borne d'électrode positive de la seconde batterie (3002), le chargeur (120) fournit de l'énergie aux première et seconde batteries.

4. Système de charge de batterie (1) selon la revendication 2, configuré de sorte que : lorsque le module de connexion de nœud (223) connecte électriquement un nœud connecté à la borne d'électrode négative de la première batterie (3001) et un nœud connecté à la borne d'électrode négative du chargeur (120), le chargeur (120) fournit de l'énergie à la première batterie (3001).

5. Système de charge de batterie (1) selon la revendication 2, étant configuré de sorte que : lorsque le module de connexion de nœud (223) connecte électriquement un nœud connecté à la borne d'électrode positive de la seconde batterie (3002) et un nœud connecté à la borne d'électrode positive du chargeur (120), le chargeur (120) fournit de l'énergie à la seconde batterie (3002).

6. Système de charge de batterie (1) selon la revendication 1, dans lequel :
le processeur (100) est configuré pour comparer la tension à deux extrémités opposées de chacune des première et seconde batteries à une tension de référence prédéterminée et commander le dispositif de dérivation (200) pour déconnecter électriquement une batterie, qui correspond à une tension à deux extrémités opposées égale ou supérieure à la tension de référence entre les première et seconde batteries, de la borne d'électrode positive et de la borne d'électrode négative du chargeur (120).

7. Procédé de charge de batterie au moyen du système de charge de batterie selon la revendication 1, le procédé comprenant :
la réception d'une pluralité de signaux de mesure de tension provenant de deux extrémités opposées de chacune des première et seconde batteries ;
la dérivation d'une tension à deux extrémités opposées de chacune des première et seconde batteries sur la base des signaux de mesure de tension ;
la comparaison de la tension à deux extrémités opposées de chacune des première et seconde batteries avec une tension de référence prédéterminée et la génération d'un signal de commande ;
la rotation du dispositif de dérivation (200) autour de son arbre central et la fourniture d'un chemin d'alimentation qui connecte au moins l'une des première et seconde batteries à deux extrémités opposées du chargeur (120) ; et
l'alimentation d'au moins une batterie par l'intermédiaire du chargeur (120).

8. Procédé de charge de batterie selon la revendication 7, dans lequel :
l'alimentation est fournie aux première et seconde batteries lorsque le dispositif de dérivation (200) connecte électriquement un nœud connecté à la borne d'électrode négative de la première batterie (3001) et un nœud connecté à la borne d'électrode positive de la seconde batterie (3002).

9. Procédé de charge de batterie selon la revendication 7, dans lequel :
l'alimentation est fournie à la première batterie (3001) lorsque le dispositif de dérivation (200) connecte électriquement un nœud connecté à la borne d'électrode négative de la première batterie (3001) et un nœud connecté à la borne d'électrode négative du chargeur (120).

10. Procédé de charge de batterie selon la revendication 7, dans lequel :
l'alimentation est fournie à la seconde batterie (3002) lorsque le dispositif de dérivation (120) connecte électriquement un nœud connecté à la borne d'électrode positive de la seconde batterie (3002) et un nœud connecté à la borne d'électrode positive du chargeur (120).
